# EUROPÄISCHE PATENTSCHRIFT

(11) **EP 1 171 232 B1**
(45) Veröffentlichungstag und Bekanntmachung des Hinweises auf die Patenterteilung: **20.11.2002**
(21) Anmeldenummer: 00920538.6
(22) Anmeldetag: 22.03.2000
(51) Int. Cl.: B01J 19/00, B01L 3/02, F04B 19/00

(54) **FLUIDHANDHABUNGSVORRICHTUNG MIT FORMATUMWANDLUNG**
FLUIDS MANIPULATION DEVICE WITH FORMAT CONVERSION
DISPOSITIF DE MANIPULATION DE FLUIDE A CONVERSION DE FORMAT

(30) Priorität: 23.03.1999 DE 19913076
(43) Veröffentlichungstag der Anmeldung: 16.01.2002
(73) Patentinhaber: HAHN-SCHICKARD-GESELLSCHAFT FÜR ANGEWANDTE FORSCHUNG E.V., D-78052 Villingen-Schwenningen (DE)
(72) Erfinder: ZENGERLE, Roland, D-78050 Villingen-Schwenningen (DE); HEY, Nicolaus, D-78664 Eschbronn-Mariazell (DE); GRUHLER, Holger, D-78609 Tuningen (DE); FREYGANG, Michael, D-78050 Villingen-Schwenningen (DE); MÜLLER, Martin, D-78661 Dietingen (DE)
(74) Vertreter: Schoppe, Fritz, Dipl.-Ing.
(86) Internationale Anmeldenummer: EP0002542
(87) Internationale Veröffentlichungsnummer: WO00056442

(56) Entgegenhaltungen:
- WO-A-97/45730
- WO-A-98/51999
- US-A- 5 847 105

## Beschreibung

Die vorliegende Erfindung bezieht sich auf eine Fluidhandhabungsvorrichtung, die eine Formatumwandlung zwischen einer Mehrzahl von Fluideingängen und einer Mehrzahl von Fluidausgängen liefert, die beispielsweise zur Verwendung in einem Dosierkopf geeignet ist.

Die erfindungsgemäße Fluidhandhabungsvorrichtung ist beispielsweise vorteilhaft in dem Dosierkopf einer Vorrichtung zum Aufbringen zumindest eines Mikrotröpfchens auf ein Substrat verwendbar, mit der eine Mehrzahl von Mikrotröpfchen auf ein Substrat aufbringbar sind. Insbesondere ist die erfindungsgemäße Fluidhandhabungsvorrichtung geeignet, um bei der Erzeugung von sogenannten Biochips, bei denen eine Mehrzahl unterschiedlicher Analyte auf ein Substrat aufgebracht ist, um unterschiedliche Stoffe in einer unbekannten Probe nachzuweisen, verwendet zu werden. Daneben ist die vorliegende Erfindung geeignet, um eine Formatumwandlung zwischen Mikrotiterplatten mit unterschiedlichen Rastermaßen zu implementieren.

Die zunmehmende Entschlüsselung der Genome von Menschen, Tieren und Pflanzen schafft eine Vielzahl neuer Möglichkeiten, von der Diagnose von genetisch bedingten Krankheiten bis hin zur wesentlich beschleunigten Suche nach pharmazeutisch interessanten Wirkstoffen. So werden beispielsweise die oben genannten Biochips künftig eingesetzt werden, um Lebensmittel hinsichtlich einer Vielzahl möglicher, gentechnisch veränderter Bestandteile zu untersuchen. In einem weiteren Anwendungsgebiet können derartige Biochips verwendet werden, um bei genetisch bedingten Krankheiten den genauen Gendefekt festzustellen, um daraus die ideale Strategie zur Behandlung der Krankheit abzuleiten.

Die Biochips, die für derartige Anwendungen verwendbar sind, bestehen in der Regel aus einem Trägermaterial, d.h. einem Substrat, auf welches eine Vielzahl unterschiedlicher Substanzen in Form eines Rasters, aufgebracht wird. Typische Rasterabstände in dem Array liegen zwischen 100 µm und 1.000 µm. Die Vielfalt der unterschiedlichen Substanzen, die als sogenannte Analyte bezeichnet werden, auf einem Biochip reicht je nach Anwendung von einigen wenigen unterschiedlichen Stoffen bis hin zu einigen 100.000 verschiedenen Stoffen pro Substrat. Mit jedem dieser unterschiedlichen Analyte kann ein ganz bestimmter Stoff in einer unbekannten Probe nachgewiesen werden.

Bringt man eine unbekannte Probenflüssigkeit auf einen Biochip auf, so treten bei bestimmten Analyten Reaktionen auf, die über geeignete Verfahren, beispielsweise eine Fluoreszenzerfassung detektiert werden können. Die Anzahl der unterschiedlichen Analyte auf dem Biochip entspricht dabei der Anzahl der unterschiedlichen Bestandteile in der unbekannten Probenflüssigkeit, die mit dem jeweiligen Biochip gleichzeitig analysiert werden können. Bei einem solchen Biochip handelt es sich somit um ein Diagnosewerkzeug, mit welchem eine unbekannte Probe gleichzeitig und gezielt hinsichtlich einer Vielzahl von Inhaltsstoffen untersucht werden kann.

Zum Aufbringen der Analyte auf ein Substrat, um einen solchen Biochip zu erzeugen, sind derzeit drei grundsätzlich verschiedene Verfahren bekannt. Diese Verfahren werden alternativ je nach benötigter Stückzahl der Biochips bzw. nach notwendiger Analytenzahl pro Chip eingesetzt.

Das erste Verfahren wird als "Contactprinting" bezeichnet, wobei bei diesem Verfahren ein Bündel aus Stahlkapillaren verwendet wird, die im Inneren mit verschiedenen Analyten gefüllt sind. Dieses Bündel aus Stahlkapillaren wird auf das Substrat gestempelt. Beim Abheben des Bündels bleiben die Analyte in Form von Mikrotröpfchen an dem Substrat haften. Bei diesem Verfahren wird die Qualität des Druckmusters allerdings sehr stark durch die Wirkung von Kapillarkräften bestimmt und hängt dadurch von einer Vielzahl von kritischen Parametern ab, beispielsweise der Qualität und der Beschichtung der Oberfläche des Substrats, der genauen Geometrie der Düse und vor allem von den verwendeten Medien. Daneben ist das Verfahren sehr anfällig gegenüber Verunreinigungen des Substrats sowie der Düsen. Dieses eben beschriebene Verfahren eignet sich bis zu einer Analytenvielfalt von einigen 100 pro Substrat.

Bei einem zweiten Verfahren zum Erzeugen von Biochips, dem sogenannten "Spotting" werden meist sogenannte Mikrodispenser eingesetzt, die ähnlich wie Tintendrucker in der Lage sind, einzelne Mikrotröpfchen einer Flüssigkeit auf einen entsprechenden Steuerbefehl hin auf ein Substrat zu schießen. Ein solches Verfahren wird als "drop-on-demand" bezeichnet. Solche Mikrodispenser sind von einigen Firmen kommerziell erhältlich. Der Vorteil bei diesem Verfahren liegt darin, daß die Analyte berührungslos auf ein Substrat aufgebracht werden können, wobei der Einfluß von Kapillarkräften bedeutungslos ist. Ein wesentliches Problem besteht jedoch darin, daß es sehr teuer und überaus schwierig ist, eine Vielzahl von Düsen, die alle mit unterschiedlichen Medien versorgt werden, parallel, bzw. in einem Array, anzuordnen. Das limitierende Element ist hierbei die Aktorik sowie die Medienlogistik, die nicht in dem gewünschten Maße miniaturisierbar sind.

Als ein drittes Verfahren zur Herstellung von Biochips wird derzeit das sogenannte "Syntheseverfahren" verwendet, bei dem die Analyte, die in der Regel aus einer Kette aneinanderhängender Nukleinsäuren bestehen, chemisch auf dem Substrat hergestellt, also synthetisiert werden. Zur Abgrenzung der räumlichen Position der unterschiedlichen Analyte werden Verfahren verwendet, wie sie aus der Mikroelektronik bekannt sind, beispielsweise Lithographieverfahren mit Maskentechnik. Dieses Syntheseverfahren ist unter dem genannten Verfahren mit Abstand das teuerste, wobei jedoch die größte Analytenvielfalt auf einem Chip herstellbar ist, in der Größenordnung von 100.000 verschiedenen Analyten pro Substrat.

Aus der WO-A-93/09668 sind Verfahren zum Bilden von Polymeren mit unterschiedlichen Monomersequenzen auf einem einzelnen Substrat bekannt, bei denen über eine Mehrzahl von Kanälen, die in einem Kanalblock gebildet sind, Monomere an ausgewählte Regionen gebracht werden, um an diesen Regionen Polymere zu synthetisieren. Zu diesem Zweck weisen die Kanalblöcke Kanäle auf, die in einer Oberfläche nach außen geöffnet sind und die einen Einlaß und einen Auslaß, die in der gegenüberliegenden Oberfläche des Kanalblocks gebildet sind, aufweisen. Über die Einlaßöffnung wird ein gewünschtes Reagenz zu dem Kanal geliefert, während an die Auslaßöffnung eine Vakuumpumpe angeschlossen wird.

Die WO-A-97/45730 bezieht sich auf Verfahren und Vorrichtungen, um Lösungen zu einem Array von Zellen zuzuführen. Zu diesem Zweck wird ein Array von Zellen auf einem Substrat gebildet. Ein weiteres Substrat besitzt Ausnehmungen und mit den Ausnehmungen verbundene Mikrokanäle, die es ermöglichen, ein Fluid in die Ausnehmungen zu liefern. Die Zellen werden nun in die Ausnehmungen eingebracht, woraufhin Lösungen durch die Kanäle in die Ausnehmungen gebracht werden, um die Zellen zu behandeln. Die Mikrokanäle sind mit Mikrokapillarröhren verbunden, über die beispielsweise unter Verwendung einer Mikrotiterplatte Lösungen zugeführt werden können.

Der vorliegenden Erfindung liegt die Aufgabe zugrunde, eine Fluidhandhabungsvorrichtung zu schaffen, die es ermöglicht, Mikrotröpfchen aus einer Mehrzahl von Fluidreservoiren in einem vorbestimmten Muster kostengünstig und exakt auf ein Substrat aufzubringen.

Diese Aufgabe wird durch eine Fluidhandhabungsvorrichtung nach Anspruch 1 oder Anspruch 2 gelöst.

Die vorliegende Erfindung schafft somit eine Fluidhandhabungsvorrichtung, die eine Formatumwandlung zwischen einem ersten Muster und einem zweiten Muster liefert. Die automatische Formatumwandlung wird durch die Anordnung der Fluideingänge, der Fluidausgänge und durch die Medienleitungen bewirkt. Das Substrat der erfindungsgemäßen Fluidhandhabungsvorrichtung ist vorzugsweise mikromechanisch, d.h. beispielsweise durch Siliziumbearbeitungstechniken oder Spritzgußtechniken, gefertigt.

Die in der ersten Oberfläche des Substrats der erfindungsgemäßen Fluidhandhabungsvorrichtung gebildeten Fluideingänge sind vorzugsweise als Fluidreservoire ausgebildet, die im Rastermaß von gebräuchlichen Mikrotiterplatten, die beispielsweise 96, 384, 1536, usw., Kammern aufweisen, angeordnet sind. Somit können die Fluidreservoire mit konventionellen Labor-Pipettierautomaten automatisiert und parallel befüllt werden. Dagegen sind die Düsen vorzugsweise in dem engeren Raster angeodnet, in dem Analyte auf Microarrays bzw. Biochips aufgebracht werden sollen.

Die vorliegende Erfindung basiert auf der Erkenntnis, daß bei den oben genannten bekannten Verfahren jeweils ein Positioniervorgang notwendig ist, um Flüssigkeiten, die aus weit voneinander entfernten Reservoirs aufgenommen werden, in engen Abständen auf ein Substrat zu drucken. Erfindungsgemäß kann die Fluidhandhabungsvorrichtung mit Standard-Automaten befüllt werden, wobei, obwohl die Flüssigkeit in "weit" voneinander beabstandete Öffnungen (Reservoire) eingefüllt wird, Mikrotröpfchen ohne weiteren Positionierungsvorgang gleichzeitig und eng benachbart zueinander gedruckt werden können.

Die erfindungsgemäße Fluidhandhabungsvorrichtung kann als ein Dosierkopf dienen oder in einem solchen vorteilhaft verwendet werden. Der Dosierkopf besitzt vorzugsweise Flüssigkeitsspeicherbereiche, die mit den Düsenöffnungen der Fluidhandhabungsvorrichtung fluidmäßig verbunden sind, derart, daß durch ein Beaufschlagen des Dosierkopfes mit einer Beschleunigung durch die Trägheit einer in dem Flüssigkeitsspeicherbereichen vorliegenden Flüssigkeit Mikrotröpfchen aus der Düsenöffnung treibbar sind. Dabei kann der Flüssigkeitsspeicherbereich vorzugsweise durch eine Steigleitung gebildet sein, die sich in einer Richtung von der Düsenöffnung weg erstreckt, die entgegengesetzt zu der Richtung ist, in der das Mikrotröpfchen aus dem Dosierkopf treibbar ist.

Die vorliegende Erfindung schafft somit eine Fluidhandhabungsvorrichtung, mit der beispielsweise Biochips kostengünstig in hohen Stückzahlen hergestellt werden können. Ferner ist die erfindungsgemäße Fluidhandhabungsvorrichtung geeignet, um eine Formatumwandlung zwischen Mikrotiterplatten mit unterschiedlichen Rastermaßen durchzuführen.

Insbesondere ermöglicht die Erfindung vorteilhaft die Implementierung eines Dosierkopfes, bei dem durch eine mechanische Beschleunigung, mit der ein Dosierkopf durch ein externes mechanisches System beaufschlagt wird, Mikrotröpfchen aus dem Dosierkopf getrieben werden. Bei dem externen mechanischen System, daß eine Antriebseinrichtung darstellt, können beliebige geeignete Vorrichtungen verwendet werden, beispielsweise Piezo-Biegewandler, Piezo-Stapel, pneumatische Antriebe und dergleichen. Auf eine Flüssigkeit, die sich in mit der Düsenöffnung fluidmäßig verbundenen Bereichen, d.h. beispielsweise der Düse selbst, einer Medienleitung und einem Reservoir befinden wirken dabei Trägheitskräfte. Da die Flüssigkeit nicht starr mit dem Dosierkopf verbunden ist, ergibt sich infolge der Trägheitskräfte eine Beschleunigung der Flüssigkeit relativ zu dem die Flüssigkeit tragenden Dosierkopf. Die Flüssigkeit setzt sich somit relativ zu dem Dosierkopf in Bewegung. Ist diese Relativbewegung zwischen der sich in der Düse befindlichen Flüssigkeit und der Düsenöffnung groß genug, so reißt ein Mikrotropfen an der Düse ab. Die Größe dieses Tropfens ist durch die Größe und Dauer der Beschleunigung des Dosierkopfes, die Größe der Flüssigkeitsmasse, durch deren Trägheit der Ausstoß bewirkt wird, den Düsendurchmesser sowie den Strömungswiderstand der Bewegung der Flüssigkeit in dem Dosierkopf bestimmt. Die Richtung der Beschleunigung, mit der der Dosierkopf beaufschlagt wird, muß dabei so orientiert sein, daß die Flüssigkeit aufgrund ihrer Trägheit aus der Düse herausgeschleudert wird und sich nicht in Flüssigkeitsspeicherbereiche oder Medienleitungen in dem Dosierkopf zurückzieht.

Unter Verwendung der erfindungsgemäßen Fluidhandhabungsvorrichtung wird gleichzeitig eine Mehrzahl von Mikrotröpfchen auf ein Substrat aufgebracht, so daß kostengünstig und zuverlässig beispielsweise ein Biochip, bei dem unterschiedliche biologisch relevante Stoffe in einem regelmäßigen Muster auf ein Substrat aufgebracht sind, erzeugt werden kann. Durch die Beschleunigung des Dosierkopfes wird aus jeder einzelnen Düse in einem Dosierkopf gleichzeitig ein Mikrotröpfchen herausgetrieben, wobei die Trägheit der Flüssigkeit genutzt wird.

Der Dosierkopf mit der erfindungsgemäßen Fluidhandhabungsvorrichtung kann dabei mit unterschiedlichen Beschleunigungen beaufschlagt werden, um den Ausstoß von Flüssigkeitströpfchen zu bewirken. Eine Möglichkeit besteht darin, den Dosierkopf aus einer Position benachbart zu dem Substrat sehr stark aus seiner Ruhelage heraus zu beschleunigen, um eine Bewegung des Dosierkopfes von dem Substrat weg zu bewirken. Eine alternative Möglichkeit besteht darin, den Dosierkopf aus einer kontinuierlichen Bewegung zu dem Substrat hin heraus abrupt abzubremsen, wobei dieses Abbremsen beispielsweise durch einen mechanischen Anschlag unterstützt werden kann. Daneben ist es ebenfalls möglich, eine mechanisch genügend steife Halterung für den Dosierkopf vorzusehen, die in Bereiche der Eigenfrequenz derselben angeregt wird, derart, daß die Halterung und damit der Dosierkopf eine Halbschwingung durchführt. Die maximale Beschleunigung tritt in diesem Fall im Umkehrpunkt der Schwingung auf, so daß die Halterung und der Dosierkopf derart angeordnet werden, daß der Dosierkopf im Umkehrpunkt der Schwingung benachbart zu dem Substrat angeordnet ist.

Wird ein solcher Dosierkopf aus einer Bewegung auf das Substrat zu unmittelbar vor dem Substrat schlagartig abgebremst, behält die Flüssigkeit aufgrund ihrer Trägheit und aufgrund der Tatsache, daß sie mit dem Dosierkopf nicht starr verbunden ist, ihre Bewegung bei und wird aus der Düse heraus auf das Substrat geschleudert. Wird ein unmittelbar über einem Substrat befindlicher, ruhender Dosierkopf schlagartig vom Substrat weg beschleunigt, kann die Flüssigkeit aufgrund ihrer Trägkeit und aufgrund der Tatsache, daß sie mit dem Dosierkopf nicht starr verbunden ist, dieser Bewegung nicht folgen, und verläßt die Düse entgegengesetzt zur Richtung der Bewegung des Dosierkopfes, die durch die Beschleunigung von dem Substrat weg bewirkt wird, und steht zunächst frei im Raum, bevor die Tropfen aufgrund der Schwerkraft auf das Substrat fallen. Hierbei kann eine Vorrichtung vorgesehen sein, um ein elektrostatisches Feld zwischen Dosierkopf und Substrat zu erzeugen, um dadurch das Aufbringen der Tröpfchen auf das Substrat zu unterstützen.

In beiden oben genannten Fällen ist es günstig, wenn die Beschleunigung des Dosierkopfes in einer Position geschieht, in der der Abstand zwischen den Düsen in dem Dosierkopf und dem Substrat sehr gering ist. Dann ist gewährleistet, daß, wenn sich beim Ablösen der Mikrotropfen jeweils Satellitentropfen bilden, diese sich spätestens auf dem Substrat mit dem Muttertropfen vereinigen. Durch den geringen Abstand ist sichergestellt, daß die Satellitentropfen auch dann auf dem Muttertropfen landen, wenn sie die Düse unter einem etwas anderen Winkel verlassen haben.

Bevorzugte Ausführungsbeispiele der vorliegenden Erfindung werden nachfolgend bezugnehmend auf die beiliegenden Zeichnungen näher erläutert. Es zeigen:
- Fig. 1: schematisch eine Querschnittansicht eines Ausführungsbeispiels einer erfindungsgemäßen Fluidhandhabungsvorrichtung in der Form eines Dosierkopfes;
- Fig. 2: schematisch eine Unteransicht des in Fig. 1 gezeigten Dosierkopfes;
- Fig. 3: schematisch eine Draufsicht des in Fig. 1 gezeigten Dosierkopfes;
- Fig. 4: schematisch ein Beispiel einer Verwendung der erfindungsgemäßen Fluidhandhabungsvorrichtung bei einer Vorrichtung zum Aufbringen von Mikrotröpfchen auf ein Substrat; und
- Fig. 5, 6, 7a), 7b) und 8: schematisch Querschnittansichten von Beispielen alternativer Fluidhandhabungsvorrichtungen gemäß der Erfindung.

Bezugnehmend auf die Figuren werden nachfolgend bevorzugte Ausführungsbeispiele der vorliegenden Erfindung hinsichtlich eines Dosierkopfs detaillierter beschrieben. Es ist jedoch klar, daß die erläuterten Grundsätze in gleicher Weise für andere Fluidhandhabungsvorrichtungen, beispielsweise Einrichtungen zur Formatumwandlung zwischen Mikrotiterplatten mit unterschiedlichen Rastermaßen gelten können.

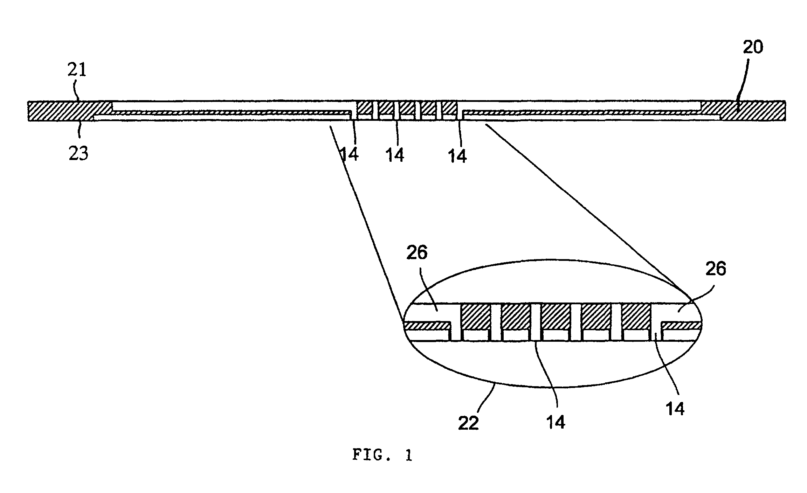

Bezugnehmend auf die Fig. 1 bis 3 wird nachfolgend ein bevorzugtes Ausführungsbeispiel der erfindungsgemäßen Fluidhandhabungsvorrichtung, bei der es sich um einen Dosierkopf handeln kann, näher erläutert. Bei dem Dosierkopf kann es sich beispielsweise um einen Chip handeln, der mit den verfahren der Silizium-Mikromechanik hergestellt ist. Alternative kann der Dosierkopf beispielsweise mittels einer Spritzgußtechnik aus einem Kunststoff oder einem Polymer gebildet sein. Ferner kann der Dosierkopf aus einem Siliziumglasverbund, einem Metall oder einer Keramik bestehen.

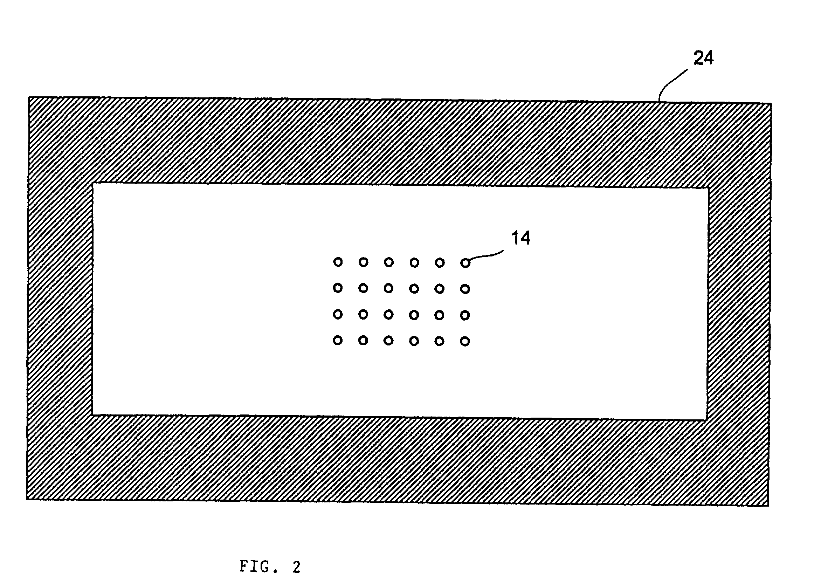

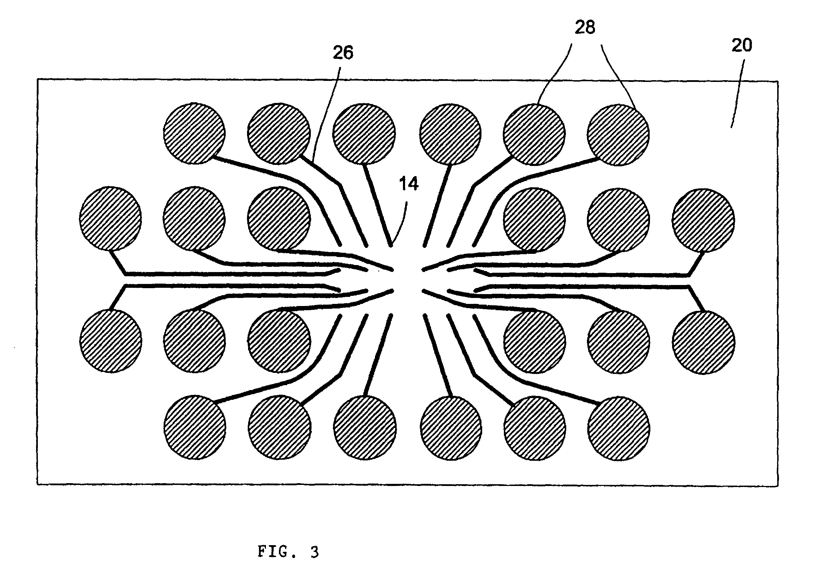

Eine schematische Querschnittansicht eines solchen Chips, d.h. einer erfindungsgemäßen Fluidhandhabungsvorrichtung ist in Fig. 1 gezeigt und mit dem Bezugszeichen 20 bezeichnet, wobei Fig. 1 ferner eine vergrößerte Ansicht 22 des Bereichs, in dem die Düsenöffnungen 14 angeordnet sind, enthält. Der Chip bzw. das Substrat 20 besitzt eine erste Oberfläche 21 und eine zweite Oberfläche 23. Die Düsen 14 sind in der zweiten Oberfläche 23, d.h. in den Figuren in der Unterseite, des Chips 20 mikrostrukturiert und gegenüber der umgebenden Siliziumoberfläche exponiert. In Fig. 1 sind sechs nebeneinander angeordnete Düsen 14 dargestellt, wobei eine Unteransicht des Chips mit dem in der Unterseite desselben strukturierten Düsen 14 in Fig. 2 gezeigt ist, wobei zu sehen ist, daß das dargestellte Ausführungsbeispiel eines Dosierkopfes vierundzwanzig Düsen enthält. Wie ebenfalls zu erkennen ist, sind die Düsen bei dem dargestellten Ausführungsbeispiel gegenüber der umgebenden Siliziumoberfläche exponiert, wobei der Dosierkopf in der Unteransicht desselben von einer Umrandung 24 umgeben ist. Die Düsen 14 sind bei dem dargestellten Ausführungsbeispiel über Fluidleitungen bzw. Medienleitungen 26 mit Medienreservoirs 28 (Fig. 3) verbunden, die ebenfalls auf dem Chip integriert sind. Die Medienreservoirs 28 sind in der ersten Oberfläche 21 des Chips 20 strukturiert. Aufgrund der Darstellung als Querschnitt sind in Fig. 1 die vier inneren Medienleitungen lediglich als vertikale Leitungen zu sehen.

Eine schematische Draufsicht des in Fig. 1 gezeigten Dosierkopfes 20 ist in Fig. 3 dargestellt, wobei vierundzwanzig Medienreservoirs 28, die über Medienleitungen 26 mit jeweiligen Düsen 14 verbunden sind, dargestellt sind. Die Medienreservoirs 28 sind bei dem dargestellten Ausführungsbeispiel in der den Düsen 14 gegenüberliegenden Oberfläche des Chips, der den Dosierkopf bildet, strukturiert. Die Medienreservoirs 28 werden vorzugsweise so ausgelegt, daß sie mit Standard-Pipettierautomaten automatisiert mit Flüssigkeiten gefüllt werden können. Dazu können dieselben beispielsweise identische Durchmesser und Abstände besitzen wie die Kammern einer bekannten Mikrotiterplatte, beispielsweise einer 348-Well-Mikrotiterplatte. Die Flüssigkeit aus den Medienreservoiren 28 wird vorzugsweise durch Kapillarkräfte über die Medienleitungen 26 zu den Düsen 14 gezogen. Die Medienleitungen 26 dienen dabei dazu, die eng beieinanderliegenden Düsen 14 mit Flüssigkeit aus einem größeren Reservoir 28 zu versorgen. Die Befüllung der Struktur kann durch eine aktive Steuerung, beispielsweise das Anlegen eines externen Drucks, unterstützt werden.

Die bezugnehmend auf die Fig. 1 bis 3 beschriebenen Düsen können beispielsweise einen Durchmesser von 200 µm aufweisen, wobei die Medienleitungen 26 ebenfalls eine Breite von 200 µm aufweisen können. Somit lassen sich bequem vierundzwanzig Düsen in einem Array aus sechs mal vier Düsen, wie in Fig. 2 zu sehen ist, im gegenseitigen Abstand von 1 mm anordnen. Der limitierende Faktor für die Anzahl der Düsen, die sich in einem Array anordnen lassen, ist die Breite der Verbindungskanäle, welche die Düsen mit den Reservoirs verbinden. Diese Verbindungskanäle müssen zwischen den Düsen nach außen geführt werden. Bei einer Reduzierung der Breite dieser Kanäle lassen sich auch 48, 96 oder mehr Düsen auf einem Dosierkopf unterbringen.

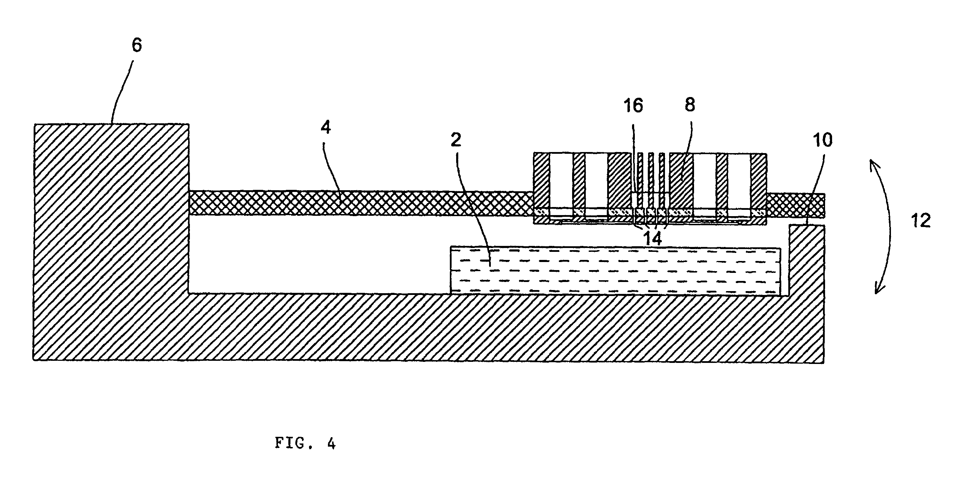

In Fig. 4 ist eine schematische Querschnittansicht einer Vorrichtung zum Aufbringen von Mikrotröpfchen auf ein Substrat 2 dargestellt, bei der die erfindungsgemäße Fluidhandhabungsvorrichtung verwendbar ist. Wie in Fig. 4 gezeigt ist, ist ein Piezo-Biegewandler 4 einseitig an einer Halterung 6 eingespannt, wobei an dem nicht eingespannten Ende des Piezo-Biegewandlers 4 ein Dosierkopf 8 angebracht ist. Der Dosierkopf 8 kann durch eine erfindungsgemäße Fluidhandhabungsvorrichtung gebildet sein.

Wie in Fig. 4 zu sehen ist, ist die Halterung 6 derart ausgestaltet, daß dieselbe einen Anschlag 10 bildet, durch den eine Bewegung des Piezo-Biegewandlers 4 und somit des Dosierkopfes 8, die schematisch durch den Pfeil 12 gezeigt ist, bei der Darstellung von Fig. 4 nach unten begrenzt ist. Der Dosierkopf 8 weist eine Mehrzahl der Düsenöffnungen 14 auf, über denen jeweils eine Flüssigkeitsmenge angeordnet ist, wie durch das Bezugszeichen 16 schematisch angezeigt ist und im weiteren detaillierter erläutert wird.

Im Betrieb wird nun der Piezo-Biegewandler 4 angetrieben, um den Dosierkopf 8 nach unten zu bewegen. Diese Bewegung wird abrupt beendet, wenn das rechte Ende des Piezo-Biegewandlers auf den Anschlag 10 trifft, so daß der Dosierkopf 8 mit einer starken negativen Beschleunigung beaufschlagt wird. Durch diese starke negative Beschleunigung bewirkt die Trägheit der oberhalb der Düsenöffnungen 14 angeordneten Flüssigkeitsmengen 16, daß ein Mikrotröpfchen aus den Düsenöffnungen 14 getrieben wird und auf das Substrat 2 trifft. Handelt es sich dabei jeweils um unterschiedliche Flüssigkeiten, kann dadurch mittels der Mehrzahl von Düsenöffnungen 14 ein Array von Analyten auf dem Substrat 2 erzeugt werden. Wie in Fig. 4 schematisch gezeigt ist, ist es vorteilhaft, daß der Dosierkopf 8 zu dem Zeitpunkt, zu dem derselbe mit der negativen Beschleunigung beaufschlagt wird, unmittelbar benachbart zu dem Substrat angeordnet ist, um ein exaktes Positionieren der Mikrotröpfchen auf dem Substrat 2 zu ermöglichen und ferner zu bewirken, daß mögliche Satellitentröpfchenanteile sich mit dem Muttertröpfchen vereinigen.

Das tatsächliche Profil der Beschleunigung, mit der der Dosierkopf beaufschlagt wird, kann über die Flankensteilheit des Spannungssignals, mit dem der Biegewandler angetrieben wird, variiert werden. Die Amplitude der Bewegung kann einfach über die Länge des Piezo-Biegewandlers oder die Amplitude des Spannungssignals angepaßt werden, wobei, wie in Fig. 4 gezeigt ist, ein Anschlag 10 vorgesehen sein kann, um das abrupte Abbremsen des Dosierkopfes zu unterstützen. Alternativ kann es ausreichend sein, ein schlagartiges Abbremsen des Dosierkopfes über ein elektrisches Steuersignal mit hoher Flankensteilheit zu bewirken.

Neben dem in Fig. 4 dargestellten Piezo-Biegewandler kann als Antriebseinrichtung zur schlagartigen Beschleunigung des Dosierkopfes beispielsweise ein Piezo-Stapelaktor verwendet werden. In diesem Fall empfiehlt es sich jedoch, die Weglänge des Aktors, die typischerweise zwischen 20 µm und 100 µm liegt, durch einen mechanischen Hebel zu vergrößern. Insgesamt ist es vorteilhaft, wenn die gesamte Strecke, um die der Dosierkopf bewegt wird, größer ist als der Durchmesser des Tropfens, der aus der Düse herausgeschleudert werden soll. Bei sehr kleinen Bewegungen besteht sonst die Gefahr, daß ein Tropfen, der sich bereits außerhalb der Düse befindet, wieder in die Düse zurückgezogen wird, bevor er vollständig abreißen kann. Überdies kann es vorteilhaft sein, den Dosierkopf nach dem schlagartigen Abbremsen, nachdem sich derselbe auf das Substrat zubewegt hat, wieder mit hoher Geschwindigkeit von dem Substrat wegzubewegen, um dadurch das Abreißen des Tropfens vorteilhaft zu beeinflussen.

Insgesamt ist es vorteilhaft, den Dosierkopf 8 und die mechanische Antriebsvorrichtung, die bei dem Ausführungsbeispiel in Fig. 4 durch den Piezo-Biegewandler 4 und die Halterung 6 gebildet ist, modular auszulegen, so daß der Dosierkopf einfach ausgetauscht werden kann.

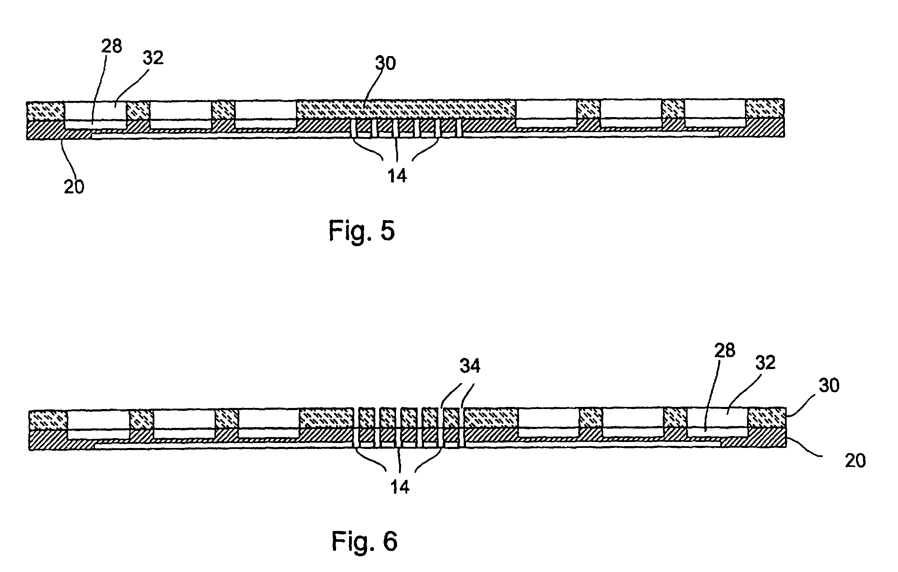

Um zu vermeiden, daß sich die Flüssigkeiten aus verschiedenen Medienleitungen im Bereich der Düsen untereinander vermischen, kann die Oberseite des Chips entweder mit einer hydrophoben Schicht (nicht dargestellt), mit einer Folie oder einem auf die Oberseite des Chips gebondeten weiteren Siliziumchip oder Glas-Chip bedeckt sein. Ein solcher Deckelchip 30 ist in Fig. 5 gezeigt, wobei zu erkennen ist, daß der Deckelchip 30 Öffnungen 32 besitzt, die eine Befüllung der Medienreservoirs 28 ermöglichen. Es kann bevorzugt sein, als Deckelschicht 30 eine elastische Folie zu verwenden, die aufgrund ihrer Nachgiebigkeit Vorteile gegenüber einer starren Abdeckplatte haben kann.

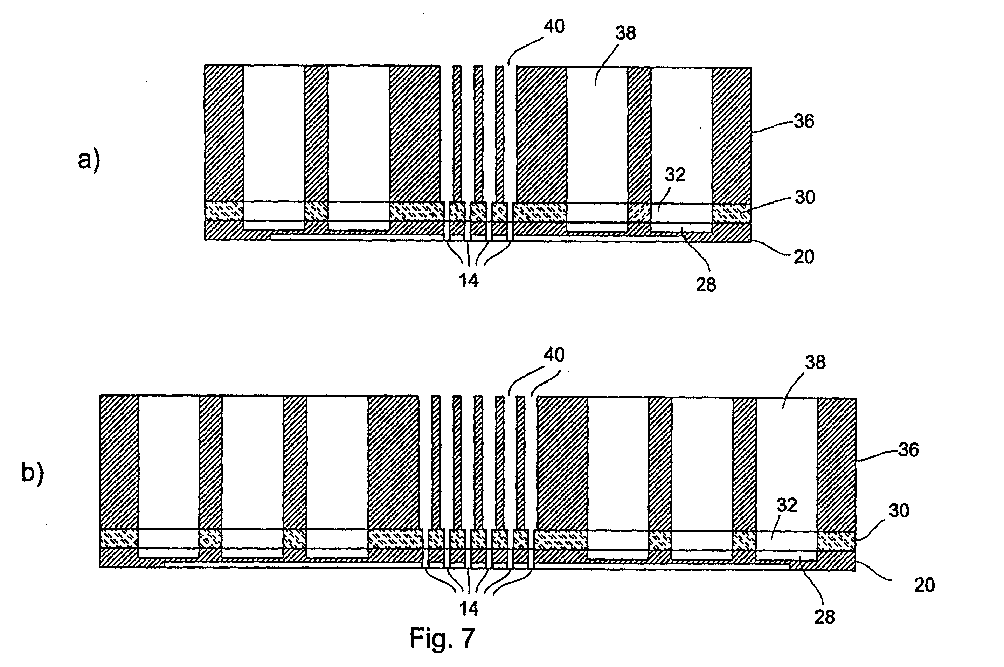

Bei den oben beschriebenen Ausführungsbeispielen eines Dosierkopfes kann die Dosierqualität von den Strömungswiderständen der Flüssigkeit in den Medienleitungen abhängen. Es kann daher bevorzugt sein, bei dem Dosierkopf die direkt über der Düse stehende Flüssigkeitsmasse zu vergrößern, um zu erreichen, daß die Dosierqualität unabhängig von den Strömungswiderständen der Medienleitungen wird. Ausführungsbeispiele von Dosierköpfen, bei denen eine solche Vergrößerung der Flüssigkeitsmasse oberhalb der Düsen realisiert ist, sind in den Fig. 6 und 7 gezeigt. Wie in Fig. 6 zu sehen ist, ist über den Düsen 14 jeweils eine axiale Steigleitung 34 angeordnet, die sich entgegengesetzt zu der Ausstoßrichtung erstreckt. Diese Steigleitungen können über eine T-förmige Verbindung (nicht dargestellt) nahe der Düse an die Medienleitungen angebunden sein, die sich unverändert an der Oberseite des Chips befinden. Die Steigleitungen 34 befüllen sich mit Flüssigkeit aus den Medienleitungen allein aufgrund von Kapillarkräften. Es sei angemerkt, daß die Medienleitungen aus Gründen der Übersichtlichkeit in den Querschnittansichten der Fig. 5 bis 7 nicht dargestellt sind.

In den Fig. 7a) und 7b) sind zwei Schnittansichten des Dosierkopfes 8, der bei der Vorrichtung, die in Fig. 1 gezeigt ist, verwendet ist, dargestellt, wobei der Schnitt in Fig. 7a) entlang der Querrichtung vier Düsen 14 zeigt, während der Schnitt in Fig. 7b) entlang der Längsrichtung sechs Düsen 14 zeigt, so daß sich wiederum eine Gesamtzahl von vierundzwanzig Düsen ergibt. Wie in den Fig. 7a) und 7b) zu erkennen ist, ist bei dem dargestellten Ausführungsbeispiel über der Deckelschicht 30 eine weitere Schicht 36 angeordnet, die zum einen vergrößerte Medienreservoirs 38 und zum anderen vergrößerte Steigleitungen 40 liefert. Auch diese Steigleitungen 40 befüllen sich mit Flüssigkeit aus den Medienleitungen (nicht dargestellt) allein aufgrund von Kapillarkräften. Somit sind die außenliegenden Reservoire sehr bequem mit Standard-Pipettierautomaten zu befüllen, während sich die Steigleitungen automatisch über Kapillarkräfte befüllen.

Die nach oben offenen Steigleitungen 34 bzw. 40 bewirken, daß die direkt über der Düse stehende Flüssigkeitsmasse vergrößert ist. Die in den Steigleitungen befindliche Flüssigkeit wird anders als die Flüssigkeit in den Medienleitungen 26 bzw. die Flüssigkeit in den Reservoiren 28 direkt in Richtung Düse beschleunigt und ist über einen minimalen Strömungswiderstand an diese angekoppelt. Wird der Dosierkopf beispielsweise auf eine Bewegung nach unten hin schlagartig abgebremst, beispielsweise durch den in Fig. 1 gezeigten Anschlag 10, so wird die Flüssigkeit aus den Steigleitungen 34 bzw. 40 direkt in Richtung Düsenausgang beschleunigt, wohingegen die in den Reservoiren 28 befindliche Flüssigkeit erst über die Medienleitungen 26 quer zur Beschleunigungsrichtung fließen muß. Dabei muß die Flüssigkeit einen sehr viel größeren Strömungswiderstand überwinden.

Wie bereits oben ausgeführt wurde, sind die Steigleitungen 34 bzw. 40 derart ausgeführt, daß sie aufgrund von Kapillarkräften stets mit Flüssigkeit befüllt sind. Neben den beschriebenen Ausführungsbeispielen, bei denen jede Düse einen eigenen Flüssigkeitsspeicherbereich aufweist, können auch mehrere Düsen eine Düsengruppe bilden und über eine gemeinsame Medienleitung mit derselben Flüssigkeit versorgt werden. Ferner ist es möglich, mehrere Abdeckplatten übereinander zu montieren, um die Packungsdichte der Düsen zu erhöhen, da dann das System der Medienleitungen auf mehrere Ebenen verteilt werden kann. Indem Leitungen auf verschiedenen Ebenen geführt werden, können sich diese auch scheinbar kreuzen, ohne daß eine Vermischung der verschiedenen Flüssigkeiten in den jeweiligen Leitungen stattfindet.

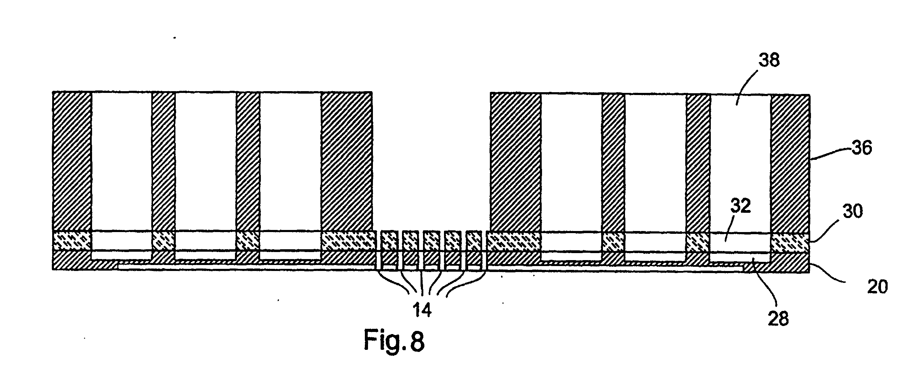

In Fig. 8 ist ein weiteres Ausführungsbeispiel einer erfindungsgemäßen Fluidhandhabungsvorrichtung dargestellt, bei der im Vergleich zu Fig. 7b) die Steigleitungen 40 weggelassen sind.

Zusätzlich zu der Verwendung der erfindungsgemäßen Fluidhandhabungsvorrichtung als ein Dosierkopf kann dieselbe ferner vorteilhaft eingesetzt werden, um eine Formatumwandlung zwischen Mikrotiterplatten mit unterschiedlichen Rastermaßen zu realisieren. Zu diesem Zweck können die Muster von Eingangsöffnungen und Ausgangsöffnungen an unterschiedliche Rastermaße von Mikrotiterplatten angepaßt sein, so daß mittels der Eingangsöffnungen ein Fluid bzw. eine Flüssigkeit von einer Mikrotiterplatte mit einem ersten Rastermaß aufgenommen werden kann und mittels der Ausgangsöffnungen das Fluid bzw. die Flüssigkeit zu einer Mikrotiterplatte mit einem zweiten Rastermaß ausgegeben werden kann.

Unter dem Ausdruck Muster von Fluideingängen und Fluidausgängen ist hierin zum einen die Anordnung der Fluid-Eingänge und -Ausgänge unter Einbeziehung der Beabstandung derselben zueinander zu verstehen. zum anderen betrifft der Ausdruck jedoch alternativ oder zusätzlich auch die Größe und/oder Form der Fluid-Eingänge und -Ausgänge.

## Patentansprüche

1. Fluidhandhabungsvorrichtung mit folgenden Merkmalen:
einem Substrat (20) mit einer ersten Oberfläche (21) und einer zweiten, der ersten Oberfläche gegenüberliegenden Oberfläche (23);
einer Mehrzahl von in einem ersten Muster in der ersten Oberfläche (21) des Substrats (20) gebildeten Fluideingängen (28), die erste Öffnungsquerschnitte aufweisen;
einer Mehrzahl von in einem zweiten, von dem ersten Muster unterschiedlichen Muster in der zweiten Oberfläche (23) des Substrats (20) gebildeten Fluidausgängen (14), die zweite Öffnungsquerschnitte aufweisen, die kleiner als die ersten Öffnungsquerschnitte sind; und
einer Mehrzahl von in dem Substrat (20) gebildeten Fluidleitungen (26), wobei jede Fluidleitung (26) einen Fluideingang (28) mit einem Fluidausgang (14) verbindet, so daß jeder Fluidausgang (14) mit exakt einem Fluideingang (28) fluidmäßig verbunden ist.

2. Fluidhandhabungsvorrichtung mit folgenden Merkmalen:
einem Substrat (20) mit einer ersten Oberfläche (21) und einer zweiten, der ersten Oberfläche gegenüberliegenden Oberfläche (23);
einer Mehrzahl von in einem ersten Muster in der ersten Oberfläche (21) des Substrats (20) gebildeten Fluideingängen (28), die im Rastermaß von Mikrotiterplatten angeordnet sind;
einer Mehrzahl von in einem zweiten, von dem ersten Muster unterschiedlichen Muster in der zweiten Oberfläche (23) des Substrats (20) gebildeten Fluidausgängen (14); und
einer Mehrzahl von in dem Substrat (20) gebildeten Fluidleitungen (26), wobei jede Fluidleitung (26) einen Fluideingang (28) mit einem Fluidausgang (14) verbindet, so daß jeder Fluidausgang (14) mit exakt einem Fluideingang (28) fluidmäßig verbunden ist.

3. Fluidhandhabungsvorrichtung nach Anspruch 1 oder 2, bei der das erste Muster Abstände zwischen benachbarten Fluideingängen (28) definiert, die größer sind als Abstände zwischen benachbarten Fluidausgängen (14), die durch das zweite Muster definiert sind.

4. Fluidhandhabungsvorrichtung nach Anspruch 1, bei der die Fluideingänge (28) in dem ersten Muster im Rastermaß von Mikrotiterplatten angeordnet sind.

5. Fluidhandhabungsvorrichtung nach einem der Ansprüche 1 bis 4, bei der die Fluideingänge (28) Fluidreservoire definieren, die von der ersten Oberfläche (21) aus befüllbar sind.

6. Fluidhandhabungsvorrichtung nach einem der Ansprüche 1 bis 5, bei der die Fluidausgänge (14) in einem Raster angeordnet sind, in dem Analyte auf einen Biochip aufgebracht werden sollen.

7. Fluidhandhabungsvorrichtung nach einem der Ansprüche 1 bis 6, bei der die Fluideingänge (28) in dem ersten Muster in einem ersten Mikrotiterplatten-Rastermaß angeordnet sind und die Fluidausgänge (14) in dem zweiten Muster in einem zweiten Mikrotiterplatten-Rastermaß angeordnet sind.

8. Fluidhandhabungsvorrichtung nach einem der Ansprüche 1 bis 7, bei der die Fluidleitungen (26) derart dimensioniert sind, daß ein Fluid durch Kapillarkräfte durch dieselben bewegbar ist.

9. Fluidhandhabungsvorrichtung nach einem der Ansprüche 1 bis 8, bei der das Substrat aus Silizium, einem Siliziumglasverbund, einem Metall oder einer Keramik besteht.

10. Fluidhandhabungsvorrichtung nach einem der Ansprüche 1 bis 8, bei der das Substrat aus einem Kunststoff oder einem Polymer besteht.

11. Fluidhandhabungsvorrichtung nach einem der Ansprüche 1 bis 10, bei der das Substrat mehrere Ebenen aufweist und die Fluidleitungen über die mehreren Ebenen verteilt sind.

## Claims

1. Fluid management apparatus comprising:
a substrate (20) having a first surface (21) and a second surface (23) which is opposite to the first surface;
a plurality of fluid inlets (28) which are formed in a first pattern in the first surface (21) of the substrate (20) and comprise first opening cross-sections;
a plurality of fluid outlets (14) which are formed in a second pattern, which is different from the first pattern, in the second surface (23) of the substrate (20) and comprise second opening cross-sections which are smaller than the first opening cross-sections; and
a plurality of fluid ducts (26) formed in the substrate (20), each fluid duct (26) connecting a fluid inlet (28) with a fluid outlet (14) such that each fluid outlet (14) is in fluidic communication with exactly one fluid inlet (28).

2. Fluid management apparatus comprising:
a substrate (20) having a first surface (21) and a second surface (23) which is opposite to the first surface;
a plurality of fluid inlets (28) which are formed in a first pattern in the first surface (21) of the substrate (20) and which are arranged in the raster scheme of microtiter plates;
a plurality of fluid outlets (14) formed in a second pattern, which is different from the first pattern, in the second surface (23) of the substrate (20); and
a plurality of fluid ducts (26) formed in the substrate (20), each fluid duct (26) connecting a fluid inlet (28) with a fluid outlet (14) such that each fluid outlet (14) is in fluidic communication with exactly one fluid inlet (28).

3. Fluid management apparatus as claimed in claim 1 or 2, wherein the first pattern defines spacings between adjacent fluid inlets (28) which are larger than spacings between adjacent fluid outlets (14) defined by the second pattern.

4. Fluid management apparatus as claimed in claim 1, wherein the fluid inlets (28) in the first pattern are arranged in the raster scheme of microtiter plates.

5. Fluid management apparatus as claimed in any of claims 1 to 4, wherein the fluid inlets (28) define fluid reservoirs which are chargeable from the first surface (21).

6. Fluid management apparatus as claimed in any of claims 1 to 5, wherein the fluid outlets (14) are arranged in a raster in which analytes are to be applied onto a biochip.

7. Fluid management apparatus as claimed in any of claims 1 to 6, wherein the fluid inlets (28) in the first pattern are arranged in a first microtiter plate raster scheme, and wherein the fluid outlets (14) in the second pattern are arranged in a second microtiter plate raster scheme.

8. Fluid management apparatus as claimed in any of claims 1 to 7, wherein the fluid ducts (26) are dimensioned such that a fluid is movable through the same by capillary forces.

9. Fluid management apparatus as claimed in any of claims 1 to 8, wherein the substrate consists of silicon, a silicon-glass compound, a metal or a ceramic.

10. Fluid management apparatus as claimed in any of claims 1 to 8, wherein the substrate consists of a plastic or a polymer.

11. Fluid management apparatus as claimed in any of claims 1 to 10, wherein the substrate comprises several levels and wherein the fluid ducts are distributed among the several levels.

## Revendications

1. Dispositif de manipulation de fluide, aux caractéristiques suivantes :
un substrat (20) avec une première surface (21) et une seconde surface (23) opposée à la première surface ;
une pluralité d'entrées de fluide (28) formées dans un premier motif dans la première surface (21) du substrat (20) et présentant des premières sections d'ouverture ;
une pluralité de sorties de fluide (14) formées dans un second motif, différent du premier motif, dans la seconde surface (23) du substrat (20) et présentant des secondes sections d'ouverture qui sont plus petites que les premières sections d'ouverture ; et
une pluralité de conduits de fluide (26) formés dans le substrat (20), chaque conduit de fluide (26) reliant une entrée de fluide (28) à une sortie de fluide (14), de sorte que chaque sortie de fluide (14) se trouve exactement en communication de fluide avec une entrée de fluide (28).

2. Dispositif de manipulation de fluide, aux caractéristiques suivantes :
un substrat (20) avec une première surface (21) et une seconde surface (23) opposée à la première surface ;
une pluralité d'entrées de fluide (28) formées dans un premier motif dans la première surface (21) du substrat (20) disposées dans la dimension modulaire de microplaquettes de titration ;
une pluralité de sorties de fluide (14) formées dans un second motif, différent du premier motif, dans la seconde surface (23) du substrat (20); et
une pluralité de conduits de fluide (26) formés dans le substrat (20), chaque conduit de fluide (26) reliant une entrée de fluide (28) à une sortie de fluide (14), de sorte que chaque sortie de fluide (14) se trouve exactement en communication de fluide avec une entrée de fluide (28).

3. Dispositif de manipulation de fluide selon la revendication 1 ou 2, dans lequel le premier motif définit des distances entre des entrées de fluide (28) adjacentes supérieures aux distances entre sorties de fluide (14) adjacentes définies par le second motif.

4. Dispositif de manipulation de fluide selon la revendication 1, dans lequel les entrées de fluide (28) dans le premier motif sont disposées dans la dimension modulaire de microplaquettes de titration.

5. Dispositif de manipulation de fluide selon l'une des revendications 1 à 4, dans lequel les entrées de fluide (28) définissent des réservoirs à fluide pouvant être remplis depuis la première surface (21).

6. Dispositif de manipulation de fluide selon l'une des revendications 1 à 5, dans lequel les sorties de fluide (14) sont disposées dans un module dans lequel des analytes doivent être placés sur une bio-puce.

7. Dispositif de manipulation de fluide selon l'une des revendications 1 à 6, dans lequel les entrées de fluide (28) dans le premier motif sont disposées dans une première dimension modulaire de microplaquettes de titration et les sorties de fluide (14) dans le second motif sont disposées dans une seconde dimension modulaire de microplaquettes de titration.

8. Dispositif de manipulation de fluide selon l'une des revendications 1 à 7, dans lequel les conduits de fluide (26) sont dimensionnés de telle sorte qu'un fluide peut être déplacé dans ceux-ci par des forces capillaires.

9. Dispositif de manipulation de fluide selon l'une des revendications 1 à 8, dans lequel le substrat est réalisé en silicium, en un matériau composite de silicium et de verre, en un métal ou en un matériau céramique.

10. Dispositif de manipulation de fluide selon l'une des revendications 1 à 8, dans lequel le substrat est réalisé en une matière plastique ou en un polymère.

11. Dispositif de manipulation de fluide selon l'une des revendications 1 à 10, dans lequel le substrat présente plusieurs plans et les conduits de fluide sont répartis sur les plusieurs plans.
